# EUROPEAN PATENT APPLICATION

(11) **EP 1 967 075 A1**
(43) Date of publication of application: **10.09.2008**
(21) Application number: 08250647.8
(22) Date of filing: 26.02.2008
(51) Int. Cl.: A23B 4/06, A23B 4/07, A23B 4/09, A23L 3/36, A23L 3/365, A23L 3/37, A23L 3/375

(54) **Underwater thawing and freezing device using complex wave motions**

(30) Priority: 26.02.2007 JP 2007080086
(71) Applicant: Shinyo Industries Co., Ltd., Fukuyama-shi, Hiroshima 720-0822 (JP)
(72) Inventor: Takenaka, Shintaro, Hiroshima 720-0822 (JP)
(74) Representative: Neath, Susannah Mairi

(57) **Abstract**

An underwater thawing and freezing device includes: a thawing and freezing tank for containing therein ethyl alcohol water as a thawing and freezing liquid; a plurality of wave motion piezoelectric vibration elements for generating wave motions in the thawing and freezing tank; a temperature control unit for controlling a temperature of the ethyl alcohol water at a predetermined temperature, the temperature control unit having a temperature sensor for detecting the temperature of the ethyl alcohol water; and a control unit for controlling the wave motion piezoelectric vibration elements. The plurality of wave motion piezoelectric vibration elements generate wave motions at a plurality of different frequencies. The wave motions travel at an angle of an about 10 degrees inclined from a vertical line from a surface of the thawing and freezing tank, on which the respective wave motion piezoelectric vibration elements are provided.

## Description

### BACKGROUND OF THE INVENTION

### 1. Field of the Invention

The present invention relates to a device for freezing and thawing a wide variety of fresh food, for use in not only at a restaurant but also at home.

### 2. Description of the Related Art

Many types of food, including fresh food, distributed in modern society is handled frozen, and thus a food freezing business and a food processing and preparing business are closely related to each other. The food freezing business pursues further freshness and better taste of frozen food when an end user thaws the frozen food for processing or cooking it. Meanwhile, the food preparing business cares about the freshness of food prior to freezing. The two businesses desirably establish a good relationship, but in reality, there is a problem that the two businesses have not yet accomplished suitable food processing techniques. It is desired that food freezing and food thawing processes are considered not as separate but closely related techniques.

In an ordinary technique in prior art of thawing a frozen food, the frozen food is taken out from a freezer, and is put in a refrigerator at a temperature of about 5 degrees Celsius over 10 hours, because the frozen food deteriorates in quality if thawed at room temperature. In the ordinary technique, however, the frozen food is exposed to oxygen in the air for many hours. Deterioration in quality and taste of the frozen food after thawing is unavoidable, and value of a final cooked food using the frozen food is greatly reduced. Frozen food is started to be thawed on a day before the frozen food is actually cooked at a restaurant or the like. If an actual number of orders or customers is less than expected, or some of the thawed frozen food is left uncooked, the leftover thawed frozen food is used in a way different from what it was originally intended, or is just thrown away, because most of the once-thawed frozen food deteriorates in quality.

On the other hand, if a restaurant or the like runs short of thawed frozen food, additional frozen food may be quickly thawed in a microwave oven. Microwaves used in the microwave oven cause molecular friction in the frozen food, and generate a large amount of heat. In other words, the microwaves thaw the frozen food by heating. This deteriorates freshness and quality of the frozen food, which may eventually damage a good reputation of the restaurant.

A retail store may sell frozen food, which is thawed at retail, after being distributed frozen at wholesale. The retail store starts thawing of a certain amount of frozen food on a day before the frozen food appear on a shelf at the store, based on a sales estimate. If the store runs short of the thawed frozen food on its shelf, some frozen food such as seafood may be quickly thawed by putting in a sink under running water. Other frozen food may be sold without being thawed.

For example, a fish distribution and processing business in Hokkaido, Japan, thaws frozen fish by putting it in a sink and leaving it there under running water for over 6 hours. This costs much time and water, and freshness of the frozen fish is lost.

Once-thawed frozen food, which may be left unsold or uncooked, is not suitable for refreezing in many cases, and is thus thrown away. Flash freezing of once-thawed frozen food may be available, but, ordinary homes and stores do not have equipment for flash freezing. If once-thawed frozen food is refrozen in a freezer at home or a store, value of the food is greatly reduced.

As described above, much of the food distributed in modern society is handled frozen, and thawing is indispensable in dealing with the foods. Freezing and thawing of frozen food has been considered as two different things, whether for commercial use or household use. Additionally, there has not been a technique of thawing frozen food without decreasing its freshness. There has not been known a thawing technique to instantly reproduce the freshness a frozen food had just before freezing. Thus a better and more integrated thawing and freezing technique is desired.

The related art described above has problems as detailed below:
1. Since thawing of frozen food takes long hours, oxygen in the air and miscellaneous bacteria attach to a surface of the frozen food, and cause oxidative discoloration and reduction in freshness and taste of the frozen food;
2. At a sushi restaurant, seemingly fresh fish for preparing sushi, which may be refrigerated in a glass case on a sushi counter, are mostly thawed frozen fish. A sushi chef pays much attention to thawing of frozen fish. However, for example, when a fatty section of tuna, which is highly priced, is carefully thawed over a long period of time, the fatty section of tuna deteriorates in taste, because miscellaneous bacteria attach to an outer surface of the fatty section, and a thin oxidized film is formed thereon;
3. When frozen food is put in a refrigerator at a temperature of 5 degrees Celsius to allow the frozen food to thaw little by little, the thawing takes a long time and freshness of the frozen food is reduced. Frozen food of some types suffers from drip loss during the thawing. The drip loss causes a reduction in taste. In addition, the thawing requires the trouble of wrapping frozen food with paper or the like in advance to absorb drips leaked therefrom;
4. Some frozen fish for use in the food preparing business is thawed by leaving it under running water for several hours, or by putting it in a refrigerator and keeping it there for a whole day. Such thawing requires a long time before the frozen food is ready to be cooked, and causes a reduction in its freshness;
5. If once-thawed frozen food is refrozen, the food loses taste when it is re-thawed. In particular, if seafood is refrozen, it tastes so bad that there is no choice but to cook it in a different way from what it was originally intended, or just to throw it away, which is an economic waste;
6. If a restaurant runs short of thawed frozen food, additional frozen food may necessarily be thawed in a microwave oven. This deteriorates its taste, and the restaurant may eventually lose a good reputation;
7. When frozen food is thawed, its color may disadvantageously change after thawing. In particular, Botan shrimps lose their bright red color to become blackened, and lose some of their sweetish taste, if they are thawed using a thawing method in the related art. Fish with red scales also suffer from the same problem; and
8. When a frozen abalone or a sea cucumber is thawed using a thawing method in the related art, its meat turns tough.

The present invention has been made in an attempt to provide a thawing and freezing device to solve the above problems.

### SUMMARY OF THE INVENTION

According to a first aspect of the present invention, there is provided an underwater thawing and freezing device, including: a thawing and freezing tank for containing therein ethyl alcohol water as a thawing and freezing liquid; a plurality of wave motion piezoelectric vibration elements for generating wave motions in the thawing and freezing tank; a temperature control unit for controlling a temperature of the ethyl alcohol water at a predetermined temperature, the temperature control unit having a temperature sensor for detecting the temperature of the ethyl alcohol water; and a control unit for controlling the wave motion piezoelectric vibration elements. The plurality of wave motion piezoelectric vibration elements generate wave motions at a plurality of different frequencies. The wave motions generated by the plurality of wave motion piezoelectric vibration elements travel at an angle of about 10 degrees inclined from a vertical line from a surface of the thawing and freezing tank, on which the respective wave motion piezoelectric vibration elements are provided.

Viewed from a further aspect of the present invention there is provided an underwater thawing and freezing device, comprising: a thawing and freezing tank for containing therein ethyl alcohol water as a thawing and freezing liquid; a plurality of wave motion piezoelectric vibration elements for generating wave motions in the thawing and freezing tank; a temperature control unit for controlling a temperature of the ethyl alcohol water at a predetermined temperature, the temperature control unit having a temperature sensor for detecting the temperature of the ethyl alcohol water; and a control unit for controlling the wave motion piezoelectric vibration elements, the plurality of wave motion piezoelectric vibration elements being capable of generating wave motions at a plurality of different frequencies and being fixed on one or more surfaces of the thawing and freezing tank at an incline to the surface.

Preferably the wave motion piezoelectric vibration elements are inclined at an angle of approximately 10 degrees from a line perpendicular to the surface of the thawing and freezing tank on which the respective elements are provided. This results in the wave motions generated by the wave motion piezoelectric elements traveling at this angle. It is also possible for other inclinations to be used if desired, for example, the wave motion piezoelectric elements could be fixed at an incline of between 20 and 5 degrees. However an angle of substantially 10 degrees is most preferred.

The underwater thawing and freezing device may preferably further include a thawing and freezing tank inner holddown cover provided under a thawing and freezing tank cover in the thawing and freezing tank and having wave motion piezoelectric vibration elements.

In the underwater thawing and freezing device, the plurality of wave motion piezoelectric vibration elements may preferably include a wave motion piezoelectric vibration element for generating wave motions at a frequency of 50 kHz and a wave motion piezoelectric vibration element for generating wave motions at a frequency of 150 kHz.

In the underwater thawing and freezing device, the plurality of wave motion piezoelectric vibration elements may preferably include a wave motion piezoelectric vibration element for generating wave motions at a frequency of 50 kHz and a wave motion piezoelectric vibration element for generating wave motions at a frequency of 2000 kHz.

In the underwater thawing and freezing device, the plurality of wave motion piezoelectric vibration elements may preferably include a wave motion piezoelectric vibration element for generating wave motions at a frequency of 50 kHz and a wave motion piezoelectric vibration element for generating wave motions at a frequency of 2.4 MHz.

In the underwater thawing and freezing device, the plurality of wave motion piezoelectric vibration elements may preferably include a wave motion piezoelectric vibration element for generating wave motions at a frequency of 50 kHz, a wave motion piezoelectric vibration element for generating wave motions at a frequency of 2000 kHz, and a wave motion piezoelectric vibration element for generating wave motions at a frequency of 2.4 MHz.

The underwater thawing and freezing device may preferably further include an underwater ultraviolet sterilizing lamp provided in the thawing and freezing tank.

In the underwater thawing and freezing device, an enzyme of a predetermined type may preferably be added to the ethyl alcohol water.

The underwater thawing and freezing device further may preferably include a net plate for putting thereon a food to be thawed or a food to be frozen provided in the thawing and freezing tank.

The underwater thawing and freezing device may preferably further include a wire net conveyer for traveling through the thawing and freezing tank.

The underwater thawing and freezing device further includes circulation pumps for circulating the ethyl alcohol water in the thawing and freezing tank.

With configurations described above, a food to be thawed put in the thawing and freezing device can be exposed to complex wave motions at a plurality of different frequencies.

Other features and advantages of the present invention will become more apparent from the following detailed description of the invention, when taken in conjunction with the accompanying exemplary drawings.

### BRIEF DESCRIPTION OF THE DRAWINGS

FIG. 1 is a side view showing an underwater thawing and freezing device according to an embodiment of the present invention, with a temperature control unit provided attached to a thawing and freezing tank.
FIG. 2 is a plan view showing the underwater thawing and freezing device according to the embodiment.
FIG. 3 and FIG. 4 are respectively a plan view and a side view, each showing an underwater thawing and freezing device with a temperature control unit built therein according to another embodiment.
FIG. 5 is a side view showing an underwater thawing and freezing device with a net plate provided in the thawing and freezing tank according to the embodiment.
FIG. 6 is a side view showing an underwater thawing and freezing device having a wire net conveyer, which travels through the thawing and freezing tank according to the embodiment.

### DETAILED DESCRIPTION OF THE EXEMPLARY EMBODIMENT

With reference to attached drawings, an embodiment of the present invention is described below.

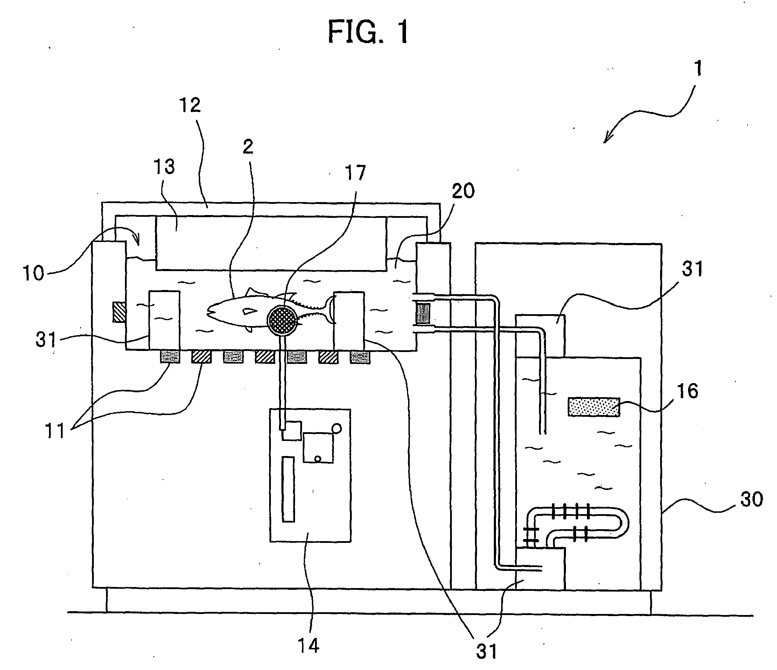

A thawing and freezing device 1, as shown in FIG. 1, of a large volume type is as high as an ordinary sink, which is ergonomically optimum. The thawing and freezing device 1 of a small volume type is small-sized and stationary.

Food is thawed and frozen in a thawing and freezing tank 10. A mixture of ethanol and water (hereinafter, simply referred to as "ethyl alcohol water") 20 is put in the thawing and freezing tank 10.

Wave motion piezoelectric vibration elements 11 are provided on a bottom surface and lateral surfaces of an inner side of the thawing and freezing device 10. The number of the wave motion piezoelectric vibration elements 11 may vary according to a size of the thawing and freezing device 10.

The wave motion piezoelectric vibration elements 11 are each arranged at an incline so that wave motions generated by the wave motion piezoelectric vibration elements 11 travel not vertically with respect to the bottom surface (or the lateral surface) of the inner side of the thawing and freezing tank 10, but at an angle. In preferred embodiments the angle is approximately 10 degrees inclined from a vertical (i.e. perpendicular) line from the bottom surface (or the lateral surface). This allows the wave motions to reflect off respective diagonal surfaces or collide against each other. Thus a food to be thawed 2 is exposed to the wave motions at various wavelengths, which are attenuated in the ethyl alcohol water 20.

The wave motion piezoelectric vibration elements 11 are not limited to of a specific type, and may be of any commercially available type.

If the wave motion piezoelectric vibration elements 11 of a commercially available type are used, frequencies of wave motions generated therefrom are predetermined. Thus, frequencies used herein are limited to 50 kHz, 150 kHz, 2000 kHz, and 2.4 MHz, as described in the third to sixth preferred aspects of the present invention. However, if the wave motion piezoelectric vibration elements 11 capable of generating wave motions at the frequencies other than the above become commercially available, the wave motion piezoelectric vibration elements 11 generating more complex wave motions at varied frequencies may be used. The present invention can be carried out with the wave motion piezoelectric vibration elements 11 generating wave motions at combined frequencies of about 1600 kHz and about 2600 kHz.

The ethyl alcohol water 20, which is prepared from fresh water with ethyl alcohol added thereto, is used as a thawing and freezing liquid. The thawing and freezing liquid will not be frozen even at ice temperature, because the ethyl alcohol is added. The ethyl alcohol also sterilizes a surface of the food to be thawed 2. An underwater ultraviolet sterilizing lamp may be additionally provided in the thawing and freezing tank 10 for better hygiene.

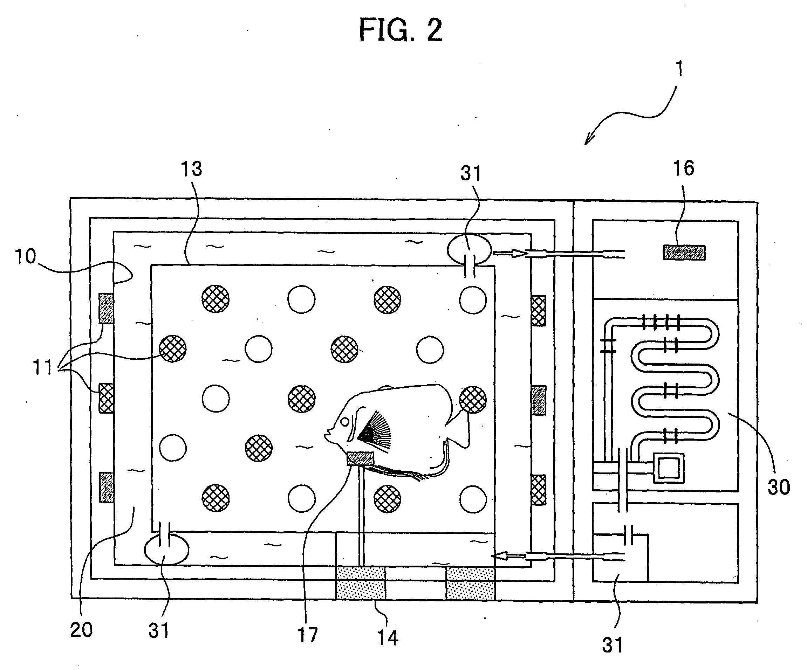

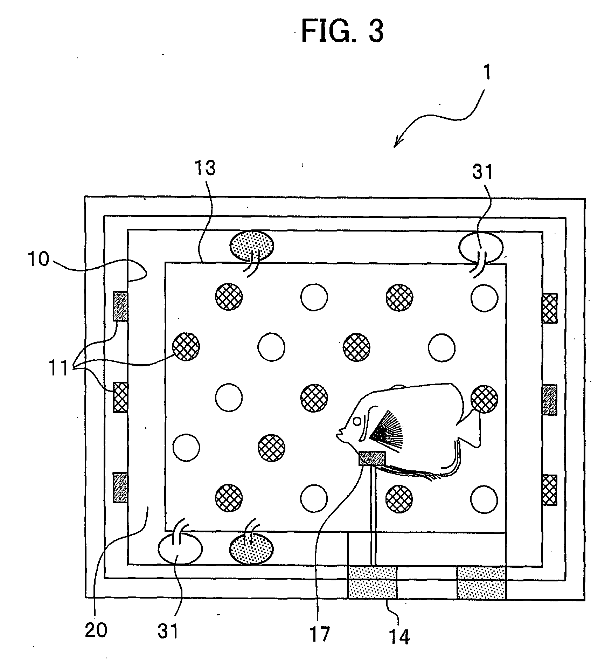

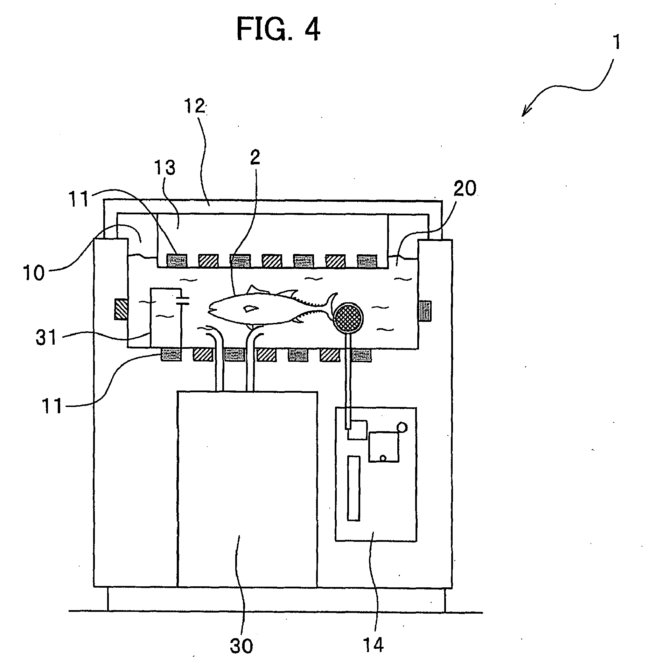

The ethyl alcohol water 20 as a thawing and freezing liquid is required to be kept at -2 degrees Celsius for thawing, and at -45 degrees Celsius for freezing. Thus a temperature control unit 30 is provided to control temperatures of the ethyl alcohol water 20. Circulation pumps 31 are also provided to circulate the ethyl alcohol water 20 in the thawing and freezing tank 10. The control unit 30 and the circulation pumps 31 may be attached to the thawing and freezing tank 10, as shown in FIG. 2, or may be built in the underwater thawing and freezing device 1, as shown in FIG. 3 through FIG. 6.

If the food to be thawed 2 or to be frozen comes up to a water surface of the ethyl alcohol water 20 due to buoyancy, a resonant effect by underwater wave motions exerted on the food to be thawed 2 or to be frozen is decreased. Thus a thawing and freezing tank inner holddown cover 13 is disposed under a bottom surface of a thawing and freezing tank cover 12. The thawing and freezing tank inner holddown cover 13 has such a dimension that at least a bottom surface thereof reaches the water surface of the ethyl alcohol water 20, when the thawing and freezing tank cover 12 is closed.

Further, as shown in FIG. 2 to FIG. 5, the thawing and freezing tank inner holddown cover 13 may have a desired number of the wave motion piezoelectric vibration elements 11.

Thawing time of the food to be thawed 2 varies according to a size thereof. A control unit 14 having an operation timer not shown controls the thawing time based on data obtained from experiments conducted in advance.

If the food to be thawed 2 is freshwater fish, meat or processed food, the ethyl alcohol water 20 is put in the thawing and freezing tank 10 as described above. If the food to be thawed 2 is sea fish, salt water may be further put therein.

The food to be thawed 2 soaked in the ethyl alcohol water 20 at about -2 degrees Celsius is thawed by extremely fine underwater wave motions. This is different from thawing at high temperature, for example, in a microwave oven, in which electromagnetic waves from a magnetron makes water molecules in the food to be thawed 2 vibrate very quickly, to thereby thaw the food to be thawed 2.

The thawing and freezing device 1 can thaw, for example, a frozen food frozen at about -45 degrees Celsius as well as a flash frozen food frozen at about -196 degrees Celsius by liquid nitrogen.

In thawing, a temperature of the ethyl alcohol water 20 put in the thawing and freezing tank 10 is set at about -2 degrees Celsius. Meanwhile, in freezing, the temperature is set at about -45 degrees Celsius. The temperature control unit 30 controls temperatures of the ethyl alcohol water 20 in accordance with a use thereof.

In freezing, a food is just put in the ethyl alcohol water 20 at about -45 degrees Celsius. The obtained frozen food may be thawed by using single-frequency wave motions, or preferably but not necessarily, by using a plurality of different frequencies. This is because different types of the foods to be thawed 2 transmit wave motions differently, according to each property thereof. If the food to be thawed 2 is fish, meat, or shellfish such as an abalone with a shell, thawing with the ethyl alcohol water 20 circulating by the circulation pumps 31 is more effective than thawing without circulation.

Ethyl alcohol in the thawing and freezing liquid has a sterilizing effect. However, not so significant effect is obtained, because only a small amount of ethyl alcohol is added, which is still sufficient to prevent the thawing and freezing liquid from freezing. Thus an underwater ultraviolet sterilizing lamp may be additionally provided in the thawing and freezing tank 10 or in the temperature control unit 30.

Experiment data shows that frozen tough meat becomes tender after thawed and cooked, when one or more of a protein degrading enzyme, a starch degrading enzyme, a cellulose degrading enzyme, an oil degrading enzyme, and other degrading enzymes are added to the ethyl alcohol water 20.

The wave motion piezoelectric vibration elements 11 are fixed on the inner side of the thawing and freezing tank 10. Wave motions from the fixed wave motion piezoelectric vibration elements 11 may not be transmitted evenly in the ethyl alcohol water 20 in some cases, and may flash thaw only a portion of the food to be thawed 2.

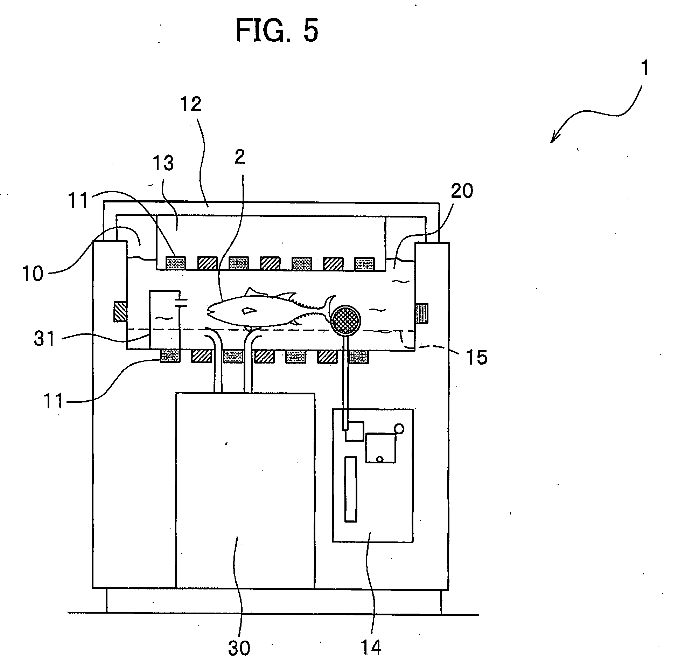

Thus a net plate 15 at a suitable distance from the bottom surface of the thawing and freezing tank 10 may be disposed as shown in FIG. 5. The food to be thawed 2 is put on the net plate 15 so as to keep the food to be thawed 2 away at a certain distance from the wave motion piezoelectric vibration elements 11.

Another experimental data shows that, if the food to be thawed 2 is thawed underwater at about -2 degrees Celsius, the thawed food well keeps the freshness it had just before being frozen, and is easily handled for cooking. Further, even after the food to be thawed 2 is completely thawed, a center temperature of the thawed food will not be over -2 degrees Celsius, as long as the ethyl alcohol water 20 is kept at -2 degrees Celsius.

A slice of fish such as sardine or flatfish having a center temperature at -2 degrees Celsius can be thawed to pass to an unfrozen state in around two minutes according to the embodiment, depending on its thickness.

As described above, the ethyl alcohol water 20 is suited to be used as the thawing and freezing liquid, because the thawing and freezing liquid in the thawing and freezing tank 10 is required to be kept at 0 degrees Celsius or below.

Wave motions at different frequencies generated by a plurality of the wave motion piezoelectric vibration elements 11 resonate frozen molecules of the food to be thawed 2. Such resonance thaws the food to be thawed 2 more quickly, and separates various bacteria from a surface of the food to be thawed 2 or a food to be frozen. The ethyl alcohol water 20 also has an aforementioned sterilizing effect.

As described above, the wave motions at different frequencies generated by a plurality of the wave motion piezoelectric vibration elements 11 resonate frozen molecules of the food to be thawed 2. Herein, the ethyl alcohol water 20 as the thawing and freezing liquid may inevitably contain impurities flowing out from the food to be thawed 2, for example, a biological protein, a saccharide, and other mixed liquids. In this case, a result of thawing with composite wave motions having 2 or 3 different frequencies is better than that with single-frequency wave motions. Thus a plurality of the wave motion piezoelectric vibration elements 11 capable of generating wave motions at different frequencies as a whole are provided herein.

Thawing time of the food to be thawed 2 in the embodiment is usually about 5 to about 10 minutes. If the food to be thawed 2 is small, the thawing time is within a few minutes. Even a shelled crab can be thawed in 10 minutes.

An average time required for preparing a dish at an ordinary restaurant is 15 minutes. The above thawing time in the embodiment ensures a sufficient cooking time, even if a frozen food for preparing a dish is taken out of a refrigerator and is then thawed in the thawing and freezing device 1, after an order of the dish is actually received at a restaurant, or after a visitor comes home unexpectedly.

In the embodiment, frozen food is thawed at low temperature in a short time period. This can keep freshness of the frozen food it had just before frozen. For example, Botan shrimps can be thawed without losing their bright red color and their sweetish taste. The food preparing industry may not always be satisfied with thawing according to the related art, because such thawing of frozen food takes long hours, its freshness is lost, and its flavor is thereby lost. The present invention can solve the above problems. In the embodiment, an original freshness of the frozen food can be reproduced, which makes it easy to determine quality of the frozen food.

The present invention also solves such problems as, after taking long hours of thawing frozen food in advance, shortage of thawed frozen food and disposal of leftover thawed frozen food.

When frozen food is thawed at about 0 degrees Celsius for a few minutes, a surface of the frozen food is hardly oxidized in such a short time period. However, if frozen food is wrapped in a thin resin film and is then thawed, oxidization can be further prevented.

When frozen food is thawed at about ice temperature for between 5 to 10 minutes, freshness of the frozen food is not affected almost regardless of a type of the frozen food. However, if a change of a thawing time is required, the number of the wave motion piezoelectric vibration elements 11 or wave frequencies generated therefrom can be changed accordingly.

Oxidization of frozen food of some types can be prevented by maintaining the frozen food at low temperature or wrapping the frozen food during thawing.

A surface of frozen food is cleaned or sterilized due to wave motions from the wave motion piezoelectric vibration elements 11 and ethyl alcohol.

In the present invention, thawing can be accomplished at low temperature in a short time period. This alone is advantageous over the prior art, and moreover, a surface of the frozen food is sterilized with wave motions during being thawed in the present invention. Further, frozen meat can be made tender by adding a food degrading enzyme to the ethyl alcohol water 20, which allows the food degrading enzyme to impregnate in the frozen food during thawing.

In the present invention, thawing can be accomplished in a short time period as described above. Therefore, it is not necessary to thaw frozen food in advance. However, if thawed frozen food is left unsold or uncooked, the thawed frozen food can be flash-frozen again without losing its freshness.

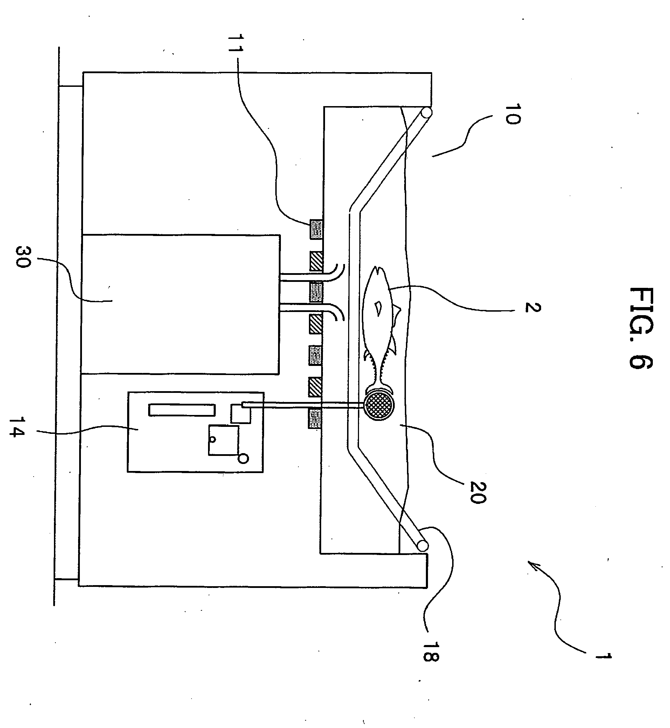

As shown in FIG. 6, an endless wire net conveyer 18 may be provided underwater in the thawing and freezing tank 10 of a large volume type. The conveyer 18 keeps on traveling, for example, with a large amount of frozen food of same kind conveyed thereon to thaw the frozen food. The conveyer 18 travels at a rate at which the frozen food is sufficiently thawed while being conveyed underwater in the thawing and freezing tank 10.

The embodiment according to the present invention has been explained as aforementioned. However, the embodiment of the present invention is not limited to those explanations, and those skilled in the art ascertain the essential characteristics of the present invention and can make the various modifications and variations to the present invention to adapt it to various usages and conditions without departing from the spirit and scope of the claims.

## Claims

1. An underwater thawing and freezing device, comprising:
a thawing and freezing tank for containing therein ethyl alcohol water as a thawing and freezing liquid;
a plurality of wave motion piezoelectric vibration elements for generating wave motions in the thawing and freezing tank;
a temperature control unit for controlling a temperature of the ethyl alcohol water at a predetermined temperature, the temperature control unit having a temperature sensor for detecting the temperature of the ethyl alcohol water; and
a control unit for controlling the wave motion piezoelectric vibration elements,
the plurality of wave motion piezoelectric vibration elements being capable of generating wave motions at a plurality of different frequencies and being fixed on one or more surfaces of the thawing and freezing tank at an incline to the surface.

2. An underwater thawing and freezing device as claimed in claim 1, wherein the plurality of wave motion piezoelectric vibration elements are fixed on one or more surfaces of the thawing and freezing tank at an angle of approximately 10 degrees inclined from a line perpendicular to the surface of the thawing and freezing tank on which the respective wave motion piezoelectric vibration elements are provided.

3. The underwater thawing and freezing device according to Claim 1 or 2, further comprising a thawing and freezing tank inner holddown cover provided under a thawing and freezing tank cover in the thawing and freezing tank and having a plurality of wave motion piezoelectric vibration elements.

4. The underwater thawing and freezing device according to Claim 1, 2 or 3
wherein the plurality of wave motion piezoelectric vibration elements include a wave motion piezoelectric vibration element for generating wave motions at a frequency of 50 kHz and a wave motion piezoelectric vibration element for generating wave motions at a frequency of 150 kHz.

5. The underwater thawing and freezing device according to Claim 1, 2 or 3
wherein the plurality of wave motion piezoelectric vibration elements include a wave motion piezoelectric vibration element for generating wave motions at a frequency of 50 kHz and a wave motion piezoelectric vibration element for generating wave motions at a frequency of 2000 kHz.

6. The underwater thawing and freezing device according to Claim 1, 2 or 3
wherein the plurality of wave motion piezoelectric vibration elements include a wave motion piezoelectric vibration element for generating wave motions at a frequency of 50 kHz and a wave motion piezoelectric vibration element for generating wave motions at a frequency of 2.4 MHz.

7. The underwater thawing and freezing device according to Claim 1, 2 or 3
wherein the plurality of wave motion piezoelectric vibration elements include a wave motion piezoelectric vibration element for generating wave motions at a frequency of 50 kHz, a wave motion piezoelectric vibration element for generating wave motions at a frequency of 2000 kHz, and a wave motion piezoelectric vibration element for generating wave motions at a frequency of 2.4 MHz.

8. The underwater thawing and freezing device according to any preceding claim, further comprising an underwater ultraviolet sterilizing lamp provided in the thawing and freezing tank.

9. The underwater thawing and freezing device according to any preceding claim,
wherein an enzyme of a predetermined type is added to the ethyl alcohol water.

10. The underwater thawing and freezing device according to any preceding claim, further comprising a net plate for putting thereon an object to be thawed or an object to be frozen provided in the thawing and freezing tank.

11. The underwater thawing and freezing device according to Claims 1 to 9, further comprising a wire net conveyer for traveling through the thawing and freezing tank.

12. The underwater thawing and freezing device according to any preceding claim, further comprising a circulation pump for circulating the ethyl alcohol water in the thawing and freezing tank.
